# EUROPEAN PATENT SPECIFICATION

(11) **EP 1 352 796 B1**
(45) Date of publication and mention of the grant of the patent: **08.11.2006**
(21) Application number: 02252506.7
(22) Date of filing: 08.04.2002
(51) Int. Cl.: B60R 22/38

(54) **Web sensor**
Gurtsensor
Capteur de ceinture de sécurité

(43) Date of publication of application: 15.10.2003
(73) Proprietor: KEY SAFETY SYSTEMS, INC., Sterling Heights, MI 48314 (US)
(72) Inventor: Smithson, Alan George, Corby Hill, Cumbria CA4 8QD (GB); Winter, David Charles, Carlisle, Cumbria CA2 7LD (GB); Blackadder, David, Corby Hill, Cumbria CA4 8QG (GB); Bowman, Paul, Little Corby, Cumbria CA4 8QF (GB)
(74) Representative: Freeman, Jacqueline Carol

(56) References cited:
- JP-A- 7 144 605
- US-A- 4 619 418
- US-A- 5 482 224

## Description

The present invention relates to a web sensor for a vehicle safety restraint retractor.

A vehicle safety restraint traditionally comprises a seat belt in a so-called three point configuration. The seat belt comprises a strong woven webbing material attached to the vehicle so that it passes horizontally over the lap of a vehicle occupant, and diagonally across the torso. Usually one end of the webbing is fixed to a structural part of the floor of the vehicle, typically between a seat and a side of the vehicle. The belt then passes across the lap of an occupant and is releasably fastened to a buckle mounted to a structural part on the other side of the seat. Subsequently the belt passes diagonally across the torso of the occupant and through the loop of a ring attached to a side pillar at approximately shoulder height for the occupant. Then the belt passes vertically downwards and the other end of the belt is attached to a retractor which is bolted to the floor of the vehicle.

The belt webbing is wound on a cylindrical spool of the retractor which is spring biased to keep the webbing wound onto the retractor and thus to keep the belt secure about the occupant's body. Under normal conditions, the spool is free to rotate to pay out webbing to provide comfort to the vehicle occupant by allowing movement within certain limits, for example to adjust a car radio or access a storage compartment.

However, when a crash occurs the spool must be locked against further payout of webbing so as to prevent the occupant moving forwards and sustaining injury such as by collision with the dashboard or front windscreen. Traditionally this is achieved by providing sensors to detect accelerations or decelerations over predetermined limits. A so-called vehicle sensor detects rapid acceleration or deceleration of the vehicle and a so-called web sensor detects a sudden pull on the belt webbing. Both are indicative of crash conditions.

A web sensor comprises an eccentrically pivoted inertia disc mounted to the spool, to rotate with the spool under normal conditions, but biased by a calibration spring so that when the spool moves suddenly, indicating a crash, the inertia disc lags behind the spool and effectively pivots relative to the spool. The inertia disc incorporates an integral locking pawl which then engages with teeth on a ratchet wheel (known as a lockcup) attached to the locking system. This locks the spool against further payout of belt webbing and thus secures the vehicle occupant.

US 5,682,224 discloses a web sensor according to the preamble of claim 1 with a locking pawl shaped to correspond to the shape of the ratchet wheel teeth when in full locking engagement.

However, the integral pawl is at a relatively long distance from the pivot point of the disc and is thus at a particularly acute angle to the load vector. It has been found that this arrangement increases the possibility of the retractor jamming due to the pawl and the lockup teeth hitting each other tip to tip. Jamming is decreased if a separate locking pawl is used but this increases the cost of the retractor.

The present invention aims to eliminate the tendency to jamming in a cost effective manner.

According to the present invention there is provided an improved arrangement and shape for the locking pawl and of the teeth of the lockcup.

According to the present invention there is provided a web sensor for a vehicle safety restraint retractor comprising an inertia member, a locking pawl and a lockcup, the inertia member being eccentrically pivotally mounted to the lockcup, the locking pawl being integrally formed with the inertia member, the lockcup comprising a set of radially inwardly pointing locking teeth for engaging with the locking pawl, characterised in that the shape and profile of the locking pawl complements the shape of the locking teeth, so that the angular position of the lockcup when one of the teeth is in a tip-to-tip locking engagement with the locking pawl is the same as the angular position of the lockcup when said one of the teeth is in a full locking engagement with the locking pawl.

Preferably the angle subtended at the centre of rotation of the lockcup by the position of the locking pawl in full locking engagement with one of the teeth of the lockcup, and the position of the locking pawl in tip-to-tip engagement with one of the teeth of the lockcup is around 360 degrees divided by the total number of teeth of the lockcup. Typically for a retractor with 24 teeth on the lockcup this results in an angle of around 15°, for example between 14° and 16°.

The lockcup teeth each have a leading edge, a trailing edge, a tip between the leading and the trailing edge and in one embodiment an intermediate section between the trailing edge and the leading edge of the subsequent tooth. The locking pawl has a locking tip between an engaging edge and a trailing edge. According to one embodiment the locus of the trailing edge of the locking pawl matches (in complement) the locus of the trailing edges of the lockcup teeth.

In another embodiment the lockcup teeth are shaped like shark's teeth in that they are longer, and the leading edge comprises two sections of different gradients, a first section adjacent the tip and a second section of the same (complementary) profile to the leading edge of the locking pawl.

Strength is improved if the profile of the locking pawl tip in such that the angle between the leading and trailing edges of the locking pawl is higher than 60 degrees and preferably higher than 70 degrees or even higher. In effect, in this configuration, the tooth gap is filled in.

For a better understanding of the present invention and to show how the same may be carried into effect, reference will now be made to the accompanying drawings, in which:
Figure 1A is a cross sectional view of a web sensor according to one embodiment of the prior art: showing the locking pawl in a full locking position;
Figure 1B is a cross sectional view of the web sensor of figure 1A showing the locking pawl in a different position;
Figure 2 is a cross sectional view through a web sensor according to another embodiment of the prior art;
Figure 3 is a cross sectional view through a web sensor according to one embodiment of the present invention;
Figure 4 is a cross sectional view through a web sensor according to a second embodiment of the present invention.
Figure 5 is a cross sectional view through a web sensor according to a third embodiment of the present invention;
Figure 6 is a cross sectional view through a web sensor according to a fourth embodiment of the present invention;
Figure 7 is a cross sectional view through a web sensor which does not form part of the invention.

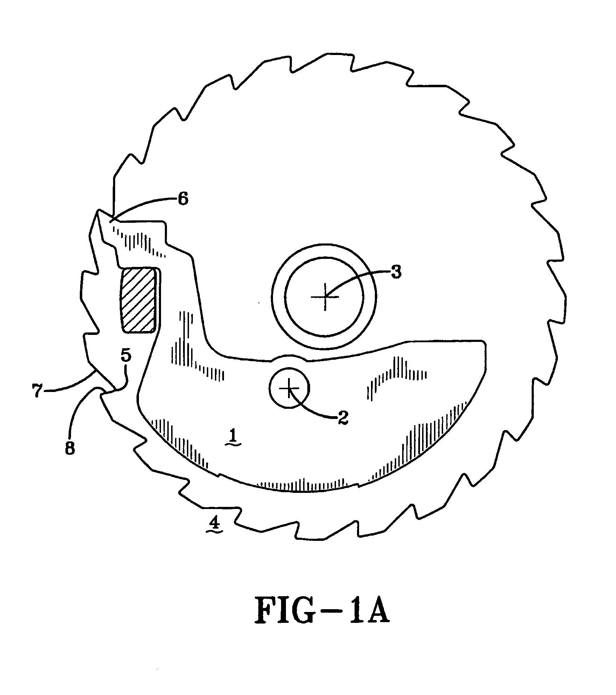

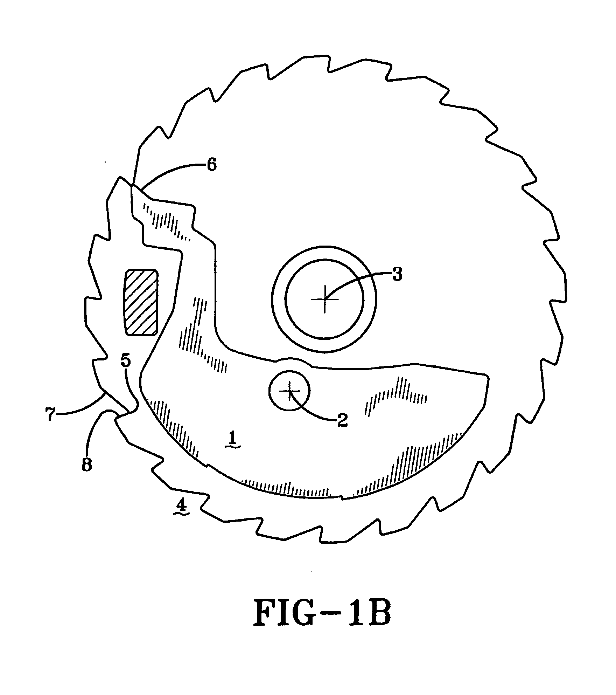

In figures 1A and 1B a traditional design of web sensor is shown comprising an inertia disc 1 pivotally mounted at pivot point 2 to a retractor spool (not shown). The pivot point 2 is offset from the axis of the spool which coincides with the axis 3 of a ratchet wheel 4. The ratchet wheel 4 has teeth 5, of saw-tooth cross section, having a long side 7 and a short side 8. They are arranged in a regular repeating pattern around the circumference, pointing inwardly of the ratchet wheel 4. The ratchet wheel teeth 5 are arranged to engage with a tooth 6 on the inertia disc 1 to lock the spool (not shown) against rotation when a crash condition is detected. A crash condition is detected when a sudden change in the speed of rotation of the spool occurs, usually a rapid acceleration, for example as the vehicle occupant exerts a sudden higher force on the seat belt when the vehicle brakes. The inertia disc 1 cannot change speed as rapidly as the spool and hence tends to lag the spool (and the ratchet wheel 4). There is then a phase difference between the inertia disc 1 and the ratchet wheel 4 and the inertia disc pivots the disc tooth 6 engages with the teeth 5 on the ratchet wheel 4, thus locking the spool and securing the vehicle occupant. This is shown in figure 1A where the pawl 6 is fully engaged between the teeth 5 of the ratchet wheel 4. When the force on the occupant, and thus on the belt, abates the teeth 5 and pawl 6 disengage and the inertia disc 1 returns to its normal position relative to the ratchet wheel 4, under the influence of a biasing or calibration spring (not shown).

A problem occurs in the situation shown in figure 1B when the disc tooth 6 engages the

A problem occurs in the situation shown in figure 1B when the disc tooth 6 engages the tip of a tooth 5 on the ratchet wheel 4 because the angular position of the spool relative to the locking systems is incorrect; the parts then tend to jam and will not easily release when the additional forces abate. It can also happen that this condition causes shearing of the tip of the teeth and thus degrades the performance and safety of the retractor. The angular position of the spool in figure 1B is incorrect by an angle of 10.71 degrees when tip-to-tip locking occurs. 10.71 degrees corresponds to two-thirds of a tooth spacing. This situation occurs frequently in use of a traditional retractor and the pawl does not easily slide off the tips of the teeth 5 and the retractor jams.

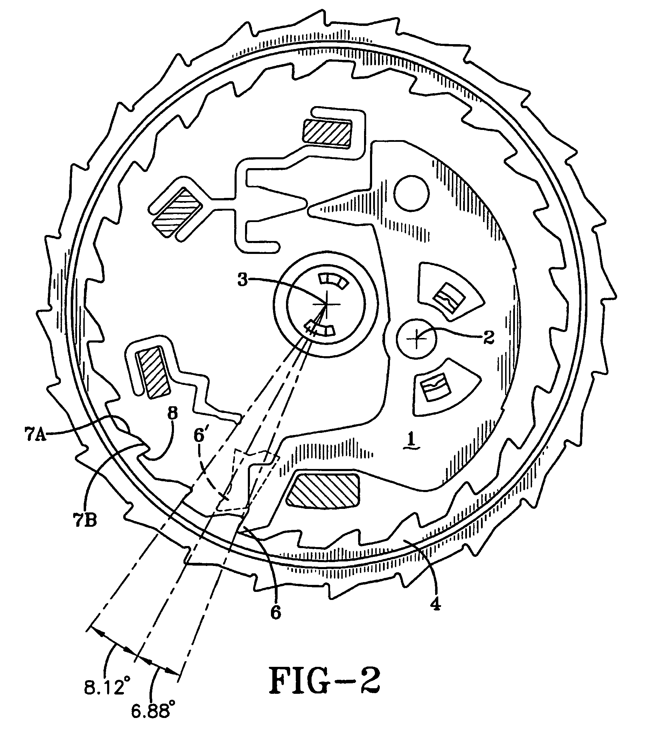

In figure 2 a known attempt to improve the retractor is shown. In this embodiment the shape of the teeth 5 is changed compared to the shape in figure 1. The teeth 5 are smaller than the teeth in figure 1 and the long sides 7 have two parts, a first part 7A of a relatively steeper gradient and a second part 7B of a relatively shallow gradient.

In this case the angular position of the spool is incorrect by only 6.88 degrees between tip-to-tip engagement of the disc tooth 6 and full engagement of the disc pawl 6 but jamming still occurs.

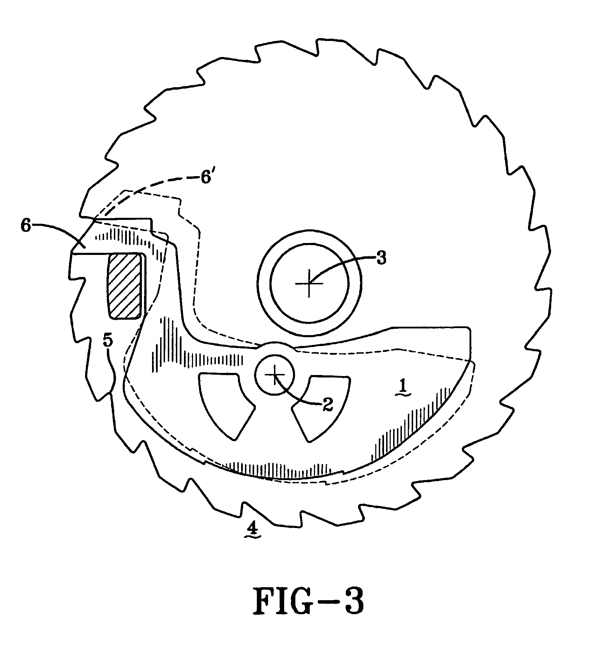

Figure 3 illustrates a new design of web sensor in which the teeth 5 are shaped to follow the locus of the inertia disc tooth 6. In this embodiment the angular position of the spool is the same no matter where the inertia disc 6 locks, ie whether it locks fully at 6 or at the tip-to-tip position 6'.

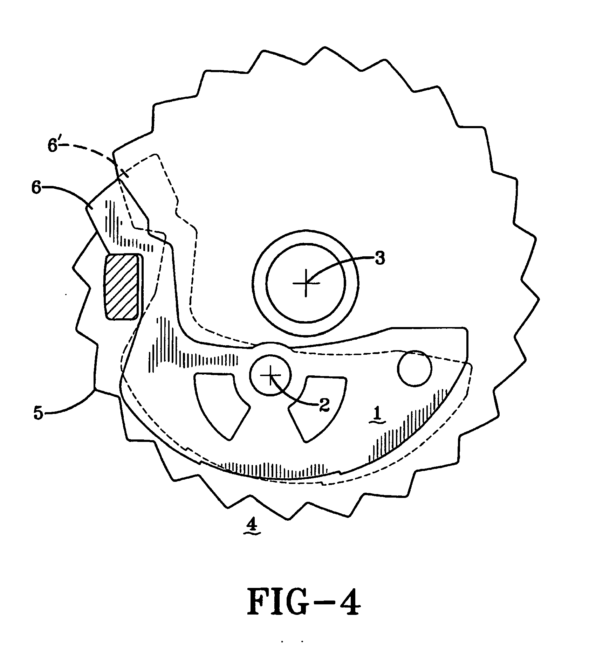

In figure 4 a variant of the invention is shown in which the disc tooth gaps are "filled in" so that the disc tooth takes the form of a square hammer head. This does not degrade the performance but does improve the strength. Again the position of the full engaged pawl is shown at 6 and the tip-to-tip position at 6'.

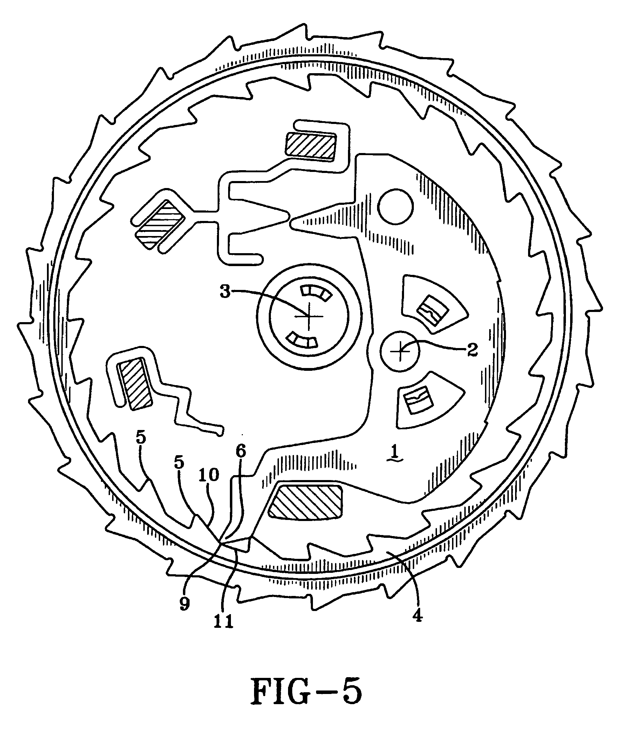

Figure 5 shows yet another variant of the invention in which the tip of the disc tooth 6 is shaped to dig in to the material of the ratchet wheel 4 to resist skipping. The design of the teeth 5 comprises a corner 9 formed between an arc 10 centered on the pivot point 2 of the inertia disc 1, and a flatter portion 11, ie the tip of one tooth 5 and the through 9 of the adjacent one are equidistant from pivot point 2.

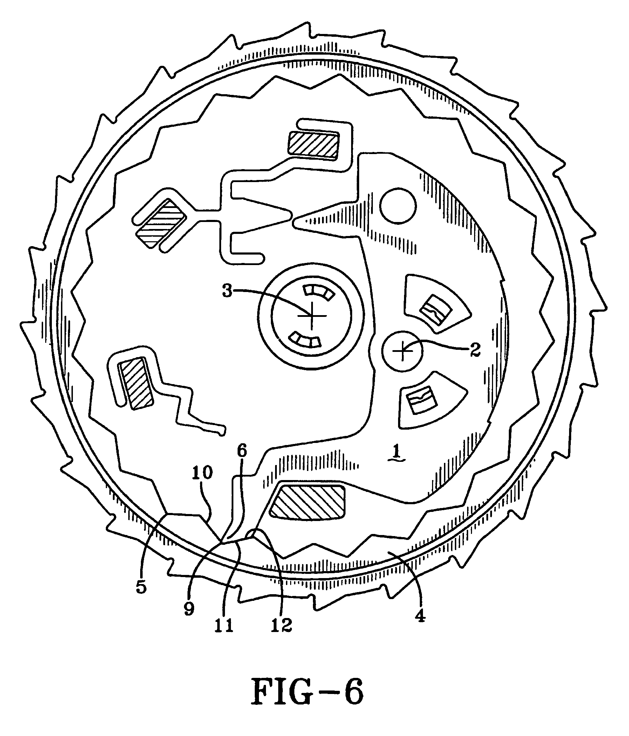

In the embodiment of figure 6 the corner 9 is formed at a less shallow angle and the face 11 is made the same shape as one face 12 of the tooth 6 of the disc 1. Thus the teeth 5 of the ratchet wheel 4 take a slightly eccentric zig-zag cross section and thus have a stronger compressive strength. The embodiments of figures 3 to 6 demonstrate the principal of maintaining the angular position of the spool irrespective of the contact position of the inertia disc tooth tip. In practice this type of tooth shape has a limited torque capacity and can also result in skipping of the pawl 6 of the inertia disc 1.

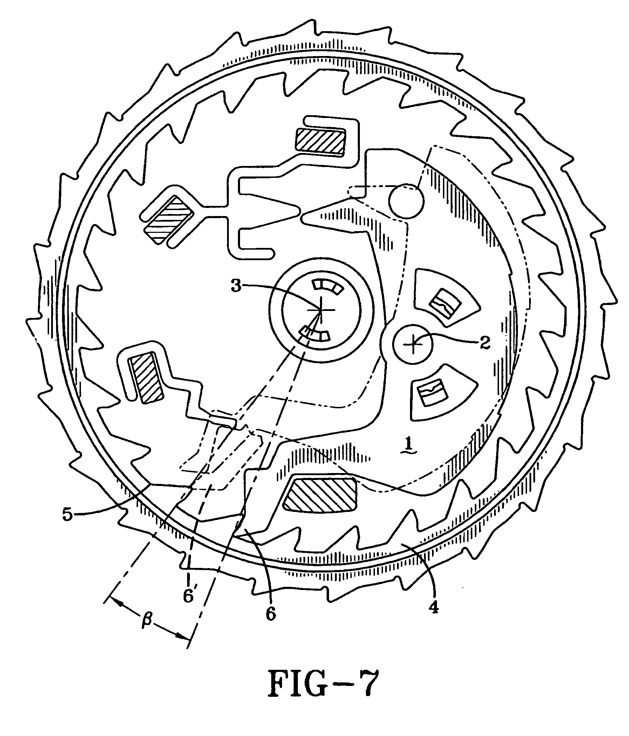

The web sensor of figure 7 has longer ratchet teeth 5 in a shark's tooth shape and the disc tooth 6 is also modified. The angle between the position of the tip of the disc pawl 6 correctly engaging a ratchet tooth and the position of the disc pawl 6 engaging the tip of an adjacent ratchet tooth is 15 degrees, which means that there is no phase change. In this way an elimination of jamming with no reduction in torque capacity, is achieved. The chosen value of 15 degrees may be approximated by 1 to 2 degrees either side depending upon the particular configuration of the retractor components to allow for some flexure of components. The arc subtended by a line between the full engagement position 6 of the inertia disc pawl and the tip-to-tip position 6 is centered on the pivot point 2 of the inertia disc.

## Claims

1. A web sensor for a vehicle safety restraint retractor comprising an inertia member (1), a locking pawl (6) and a lockcup (4), the inertia member (1) being eccentrically pivotally mounted to the lockcup (4), the locking pawl (6) being integrally formed with the inertia member (1), the lockcup (4) comprising a set of radially inwardly pointing locking teeth (5) for engaging with the locking pawl (6), **characterised in that** the shape and profile of the locking pawl (6) complements the shape of the locking teeth (5), so that the angular position of the lockcup (4) when one of the teeth (5) is in a tip-to-tip locking engagement with the locking pawl (6) is the same as the angular position of the lockcup(4) when said one of the teeth (5) is in full locking engagement with the locking pawl (6).

2. A web sensor according to claim 1 arranged so that the angle subtended at the centre of rotation of the lockcup (4) by the position of the locking pawl (6) in full locking engagement with one of the teeth (5) of the lockcup (4), and the position of the locking pawl (6) in tip-to-tip engagement with one of the teeth (5) of the lockcup (4) is around 360 degrees divided by the total number of teeth (5) of the lockcup (4).

3. A web sensor according to claim 2 wherein the angle is between 14 and 16 degrees.

4. A web sensor according to claim 2 wherein the angle is about 15 degrees.

5. A web sensor according to any one of the preceding claims wherein the lockcup teeth (5) each have a leading edge, a trailing edge, a tip between the leading and the trailing edge and the locking pawl has a locking tip between an engaging edge and a trailing edge and the locus of the trailing edge of the locking pawl (6) complements the locus of the trailing edges of the lockcup teeth (5).

6. A web sensor according to claim 5 wherein the lockcup teeth (5) each also have an intermediate section between the trailing edge and the leading edge of the adjacent tooth (5).

7. A web sensor according to any one of the preceding claims wherein the lockcup teeth (5) are shaped like a shark's teeth.

8. A web sensor according to any one of the preceding claims wherein the profile of the tip of the locking pawl (6) is such that the angle between the leading and trailing edges of the locking pawl is higher than 60 degrees.

9. A web sensor according to any one of the preceding claims wherein the profile of the tip of the locking pawl (6) is such that the angle between the leading and trailing edges of the locking pawl is higher than 60 degrees.

10. A web sensor according to claim 9 wherein the angle is higher than 70 degrees.

11. A web sensor according to claim 9 or claim 10 wherein the tooth gap is filled in.

12. A web sensor according to any one of the preceding claims wherein the tip of one ratchet tooth (5) and the trough of the adjacent ratchet tooth (5) are equidistance from the centre of pivoting of the inertia member (1).

## Patentansprüche

1. Gurtsensor für einen Fahrzeugsicherheitsrückhalteaufroller, der ein Trägheitselement (1), eine Sperrklinke (6) und eine Arretierschale (4) umfasst, wobei das Trägheitselement (1) exzentrisch schwenkbar an der Arretierschale (4) montiert ist, wobei die Sperrklinke (6) einstückig mit dem Trägheitselement (1) ausgebildet ist, wobei die Arretierschale (4) einen Satz von radial nach innen zeigenden Arretierzähnen (5) für den Eingriff mit der Sperrklinke (6) umfasst, **dadurch gekennzeichnet, dass** Form und Profil der Sperrklinke (6) die Form der Arretierzähne (5) ergänzen, so dass die Winkelposition der Arretierschale (4), wenn sich einer der Zähne (5) in einem Spitze-an-Spitze-Sperreingriff mit der Sperrklinke (6) befindet, dieselbe ist wie die Winkelposition der Arretierschale (4), wenn dieser eine Zahn (5) im vollen Sperreingriff mit der Sperrklinke (6) ist.

2. Gurtsensor nach Anspruch 1, der so angeordnet ist, dass der Winkel, der am Rotationsmittelpunkt der Arretierschale (4) durch die Position der Sperrklinke (6) im vollen Sperreingriff mit einem der Zähne (5) der Arretierschale (4) und die Position der Sperrklinke (6) im Spitze-zu-Spitze-Eingriff mit einem der Zähne (5) der Arretierschale (4) begrenzt wird, etwa 360 Grad dividiert durch die Gesamtzahl der Zähne (5) der Arretierschale (4) beträgt.

3. Gurtsensor nach Anspruch 2, wobei der Winkel zwischen 14 und 16 Grad liegt.

4. Gurtsensor nach Anspruch 2, wobei der Winkel etwa 15 Grad beträgt.

5. Gurtsensor nach einem der vorherigen Ansprüche, wobei dieArretierschalenzähne (5) jeweils eine Vorderkante, eine Hinterkante, eine Spitze zwischen der Vorder- und der Hinterkante haben und die Sperrklinke eine Sperrspitze zwischen einer Eingriffskante und einer Hinterkante hat und der Ort der Hinterkante der Sperrklinke (6) den Ort der Hinterkanten derArretierschalenzähne (5) ergänzt.

6. Gurtsensor nach Anspruch 5, wobei dieArretierschalenzähne (5) jeweils auch einen Zwischenabschnitt zwischen der Hinterkante und der Vorderkante des Nachbarzahns (5) hat.

7. Gurtsensor nach einem beliebigen der vorherigen Ansprüche, wobei die Arretierschalenzähne (5) wie Haifischzähne geformt sind.

8. Gurtsensor nach einem beliebigen der vorherigen Ansprüche, wobei das Profil der Spitze der Sperrklinke (6) derart ist, dass der Winkel zwischen der Vorder- und der Hinterkante der Sperrklinke größer als 60 Grad ist.

9. Gurtsensor nach einem beliebigen der vorherigen Ansprüche, wobei das Profil der Spitze der Sperrklinke (6) derart ist, dass der Winkel zwischen der Vorder- und der Hinterkante der Sperrklinke größer als 60 Grad ist.

10. Gurtsensor nach Anspruch 9, wobei der Winkel größer als 70 Grad ist.

11. Gurtsensor nach Anspruch 9 oder Anspruch 10, wobei die Zahnlücke ausgefüllt ist.

12. Gurtsensor nach einem beliebigen der vorherigen Ansprüche, wobei die Spitze von einem Klinkenzahn (5) und die Mulde des benachbarten Klinkenzahns (5) den gleichen Abstand vom Schwenkmittelpunkt des Trägheitselementes (1) haben.

## Revendications

1. Capteur de sangle pour un enrouleur de retenue de sécurité, comprenant un élément d'inertie (1), un cliquet de verrouillage (6) et une coupelle de verrouillage (4), l'élément d'inertie (1) étant monté à la coupelle de verrouillage (4) de sorte à pouvoir effectuer un pivotement excentrique, le cliquet de verrouillage (6) étant formé d'une seule pièce avec l'élément d'inertie (1), la coupelle de verrouillage (4) comprenant un ensemble de dents de verrouillage orientées radialement vers l'intérieur (5) pour un engagement dans le cliquet de verrouillage (6), **caractérisé en ce que** la forme et le profil du cliquet de verrouillage (6) sont complémentaires de la forme des dents de verrouillage (5), de sorte que la position angulaire de la coupelle de verrouillage (4), lorsqu'une des dents (5) est engagée par verrouillage pointe contre pointe dans le cliquet de verrouillage (6) , est identique à la position angulaire de la coupelle de verrouillage (4) lorsque ladite une des dents (5) est engagée complètement par verrouillage dans le cliquet de verrouillage (6).

2. Capteur de sangle selon la revendication 1, agencé de sorte que l'angle limité au niveau du centre de rotation de la coupelle de verrouillage (4) par la position du cliquet de verrouillage (6), engagé complètement dans une des dents (5) de la coupelle de verrouillage (4), et la position du cliquet de verrouillage (6), engagé pointe contre pointe dans une des dents (5) de la coupelle de verrouillage (4), correspond à environ 360 degrés, divisés par le nombre total des dents (5) de la coupelle de verrouillage (4).

3. Capteur de sangle selon la revendication 2, dans lequel l'angle est compris entre 14 et 16 degrés.

4. Capteur de sangle selon la revendication 2, dans lequel l'angle est d'environ de 15 degrés.

5. Capteur de sangle selon l'une quelconque des revendications précédentes, dans lequel les dents de la coupelle de verrouillage (5) comportent chacune un bord avant, un bord arrière, une pointe entre les bords avant et arrière, le cliquet de verrouillage comportant une pointe entre un bord d'engagement et un bord arrière et l'emplacement du bord arrière du cliquet de verrouillage (6) étant complémentaire de l'emplacement des bords arrière des dents de la coupelle de verrouillage (5).

6. Capteur de sangle selon la revendication 5, dans lequel les dents de la coupelle de verrouillage (5) comportent en outre chacune une section intermédiaire entre le bord arrière et le bord avant de la dent adjacente (5).

7. Capteur de sangle selon l'une quelconque des revendications précédentes, dans lequel les dents de la coupelle de verrouillage (5) ont une forme en dents de requin.

8. Capteur de sangle selon l'une quelconque des revendications précédentes, dans lequel le profil de la pointe du cliquet de verrouillage (6) est tel que l'angle entre les bords avant et arrière du cliquet de verrouillage est supérieur à 60 degrés.

9. Capteur de sangle selon l'une quelconque des revendications précédentes, dans lequel le profil de la pointe du cliquet de verrouillage (6) est tel que entre les bords avant et arrière du cliquet de verrouillage est supérieur à 60 degrés.

10. Capteur de sangle selon la revendication 9, dans lequel l'angle est supérieur à 70 degrés.

11. Capteur de sangle selon les revendications 9 ou 10, dans lequel l'espace entre les dents est rempli.

12. Capteur de sangle selon l'une quelconque des revendications précédentes, dans lequel la pointe d'une dent de rochet (5) et le creux de la dent de rochet adjacente (5) sont espacés de la même distance du centre de pivotement de l'élément d'inertie (1).
